# EUROPÄISCHE PATENTSCHRIFT

(11) **EP 0 818 508 B1**
(45) Veröffentlichungstag und Bekanntmachung des Hinweises auf die Patenterteilung: **12.09.2001**
(21) Anmeldenummer: 97110630.7
(22) Anmeldetag: 30.06.1997
(51) Int. Cl.: C08L 77/00, C08K 3/20, C08K 3/34, C08K 7/00, C08J 5/18, B32B 27/34

(54) **Festkörperpartikel enthaltende Polyamidmischungen**
Polyamide compositions containing solid particles
Compositions de polyamide contenant des particules solides

(30) Priorität: 11.07.1996 DE 19627905
(43) Veröffentlichungstag der Anmeldung: 14.01.1998
(73) Patentinhaber: WOLFF WALSRODE AG, 29655 Walsrode (DE)
(72) Erfinder: Kaschel, Gregor, Dr., 29664 Walsrode (DE); Klein, Rudi, 29664 Walsrode (DE)
(74) Vertreter: Kutzenberger, Helga, Dr.

(56) Entgegenhaltungen:
- EP-A- 0 458 470
- EP-A- 0 514 146
- EP-A- 0 540 293
- WO-A-93/04118
- WO-A-95/07180
- DE-A- 3 811 544
- DE-B- 2 817 027
- US-A- 3 080 345
- Mitsubishi Gas Chemical Company: Produktbeschreibung Nylon MXD6/Nylon 6
- M. BAKKER: "The Wiley Encyclopedia of Packaging Technology", 1986, J. WILEY & SONS, NEW YORK

## Beschreibung

Zahlreiche Produkte sind in Folien abgepackt. Die Verarbeitung auf den Verpackungsmaschinen erfordert häufig Folien, die sterilisierbar sind. Der Sauerstoffdurchlässigkeit wird eine große Bedeutung beigemessen, da sie maßgeblich die Haltbarkeit bestimmt. Hier kommt insbesondere der Transparenz nach einer Sterilisation in wässriger Umgebung bei ca. 120 bis 130°C eine große Bedeutung zu. Die vorliegende Erfindung betrifft eine Polymermischung enthaltend ein Polymerisat, bestehend aus m-Xylylendiamin und Adipinsäure, und ein aliphatisches Polyamid und organische oder anorganische Teilchen mit einer charakteristischen Länge von kleiner 800 nm.

Den Stand der Technik betreffend Polymere beschreibt unter anderem *Domininghaus* (Hans Dominighaus: Die Kunststoffe und ihre Eigenschaften, VDI-Verlag 1992, Düsseldorf). Speziell bezüglich der Barrieretechnology *Shires* (David Shires: Developments in barrier technology, Pira International 1993, UK) und bezüglich Verpackungen *The Wiley Encyclopedia of Packaging Technology* (Hrg. M. Bakker, D. Eckroth; John Wiley & Sons, 1986) und speziell für Kunststoff-Folien *Nentwig* (Joachim Nentwig: Kunststoff-Folien, Carl Hanser Verlag 1994, München).

Viele Patente befassen sich mit Mischungen bestehend aus Polyamiden mit EVOH. Jedoch ist diesen Mischungen gemein, da sie alle EVOH enthalten, daß sie während einer Hitzesterilisation in wässriger Umgebung delaminieren können, da das EVOH wasserlöslich ist.

In WO 9507180 wird ein sterilisierbarer Film enthaltend mindestens 3 Schichten beschrieben, wobei die innere Schicht ein Blend aus einen aliphatisch/aromatischen Polyamid und EVOH ist. Mischungen enthaltend Polyamid und EVOH sind mechanisch nicht so zäh wie reines Polyamid, weiterhin bereitet die Extrusion dieser Mischung aufgrund thermischer Schädigung des EVOH's Probleme.

In WO 9304118 wird eine Polymerkomposition beschrieben, die weniger als 60 Gew.-% eines tellerartigen Partikels mit einer mittleren Dicke kleiner 5 nm enthält. Als Vorteile werden erhöhte Festigkeit, Steifheit und Permeabilität genannt. Der Einfluß der Nanoteilchen auf die Transparenz, insbesondere nach einer Wärmebehandlung wird nicht erwähnt.

Wünschenswert ist ein Polymer bzw. Polymermischung, welches folgenden Anforderungen genügt:
1. hohe Sauerstoffbarriere,
2. keine signifikante Veränderung der Transparenz während der Sterilisation,
3. keine Lamination nach einer Hitzesterilisation.

Beide Punkte zu vereinen ist sehr schwierig. So kann z.B. mit EVOH eine sehr hohe Wasserdampfbarriere erreicht werden, jedoch ist das EVOH für eine Naßdampfsterilisation nicht geeignet, da es während der Sterilisation eintrübt. Von PA MXD6 ist bekannt, daß es das Polyamid mit den besten Sperreigenschaften ist (David Shires: Developments in barrier technology, Pira International 1993, UK: Seite 24). Auch PA MXD6 trübt während der Sterilisation ein. Es muß daher mit z.B. PA6 gemischt werden, um die Eintrübung zu verhindern. Dadurch verringert sich wiederum die Sauerstoffbarriere (Produktbeschreibung Nylon-MXD6 der Fa. Mitsubishi Gas Chemical).

Für diese Anmeldung gelten folgende allgemeine Angaben:
Alle genannten Polymere sind kommerziell erhältliche Handelsprodukte. Bei Mischungen werden, wenn nicht anders angegeben, die Konzentrationen der einzelnen Polymere in Gew.-% ausgedrückt. Die an einer Mischung beteiligten Polymere werden durch runde Klammern "(" bzw. ")" zusammengefaßt und mit "+"-Zeichen miteinander verbunden. Die angegeben Dichten sind entsprechend ISO 1183 bei 23°C bestimmt. Die Schmelzflußindex MFR wird entsprechend ISO 1133 bei einer Temperatur von 190°C und einem Auflagegewicht von 2,16 kg gemessen, wenn nicht anders vermerkt. Die Polymere werden entsprechend der vereinbarten Konvention abgekürzt. Unterschiedliche Polymere gleicher Klasse werden durch einen Bindestrich und eine Zahl ausgewiesen (Beispiel: LLDPE-2).

Unter "Polyamid" versteht man im weitesten Sinne polymere Verbindungen, die durch die Säureamid-Gruppe -NH·CO- miteinander verknüpft sind (siehe auch Kunststoff-Handbuch Band VI, Polyamide, Carl Hanser Verlag München 1966,). Man unterscheidet zwei Gruppen von Polamiden: Aufbau aus einem Monomer durch Polykondensation von ω-Aminocarbonsäuren oder Polymerisation ihrer Lactame zum Polyamid 6-Typ und solche, die aus zwei Monomeren (Diaminen und Dicarbonsäuren) durch Polykondensation zum Polyamid 66-Typ entstanden sind (Gnauck, Fründt: Einstieg in die Kunststoffchemie, Carl Hanser Verlag München 1991). Die Kennzeichnung der Polyamide erfolgt durch Zahlen, welche die Anzahl der C-Atome im Ausgangsstoff bzw. - bei zwei Komponenten - im Diamin (erste Zahl) und in der Dicarbonsäure (zweite Zahl) angeben.

Als "aliphatische Polyamide" werden alle Polyamide bezeichnet, deren Monomere entweder aliphatische ω-Aminocarbonsäuren (z.B. PA 6) oder aber aliphatische Diamimen und aliphatische Dicarbonsäuren (z.B. PA 66) sind.

| Kurzzeichen | w-Aminocarbonsäure bzw. Lactame | Diamin | Dicarbonsäure | Erläuterung |
|---|---|---|---|---|
| PA 6 | ε-Caprolactam | - | - | aliphatisch |
| PA 11 | 11-Aminoundecansäure | - | - | aliphatisch |
| PA 12 | ε-Laurinlactam | - | - | aliphatisch |
| PA 66 | - | Hexamethylendiamin | Adipinsäure | aliphatisch |
| PA 610 | - | Hexamethylendiamin | Sebacinsäure | aliphatisch |
| PA 6I | - | Hexamethylendiamin | Isophthalsäure | halbaromatisch, amorph |
| PA MXD6 | - | m-Xylylendiamin | Adipinsäure | halbaromatisch |
| PA 6/66 | ε-Caprolactam | Hexamethylendiamin | Adipinsäure | Copolyamid, aliphatisch |
| PA 6/6T | ε-Caprolactam | Hexamethylendiamin | Terephthalsäure | Copolyamid |
| PA 6I/6T | - | Hexamethylendiamin | Isophthalsäure und Terephthalsäure | Copolyamid, halbaromatisch |
| PA 6/6I | ε-Caprolactam | Hexamethylendiamin | Isophthalsäure | Copolyamid |
| PA 6/66 | ε-Caprolactam und ε-Laurinlactam | - | - | Copolyamid |
| Tabelle zur Erläuterung der Nomenklatur der Polyamide | | | | |

Als "Nanoteilchen" (Abkürzung = NT) werden die Partikel verstanden, die einen charakteristischen Partikeldurchmesser im Bereich von Nanometern aufweisen. Die Nanoteilchen können aus organischen wie auch aus anorganischen Stoffen bestehen. Als charakteristischer Partikeldurchmesser wird die Sehnenlänge des Partikels verstanden.

Das "EVOH" (Ethylen/Vinylalkohol-Copolymerisat) enthält bevorzugt 40 bis 85 Mol-% Vinylacetat, die zu mindestens 90% verseift sind. Die Schmelzfließrate MFR liegt vorzugsweise im Bereich von 0,7 bis 20 g/10min gemessen nach ISO 1133 bei 190°C und einem Auflagegewicht von 2160 g. Die Dichte liegt vorzugsweise im Bereich von 1,1 bis 1,3 g/cm³ gemessen nach ASTM D1505.

Als "Siegelschicht" wird die außen liegende Schicht der Folie mit dem niedrigsten Schmelzpunkt bezeichnet. Enthalten die Außenschichten Polymermischungen, so wird als Siegelschicht die Folienaußenseite bezeichnet, die die niedrigst schmelzende Komponente enthält. Bei der Angabe von Folienaufbauten wird die Siegelschicht rechts geschrieben, wenn nicht anders angegeben.

Als "LDPE" wird Polyethylen niedriger Dichte bezeichnet, das im Dichtebereich von 0,86 bis 0,93 g/cm³ liegt. Die LDPE-Moleküle zeichnen sich durch einen hohen Verzweigungsgrad aus.

Als "LLDPE" werden die linearen Polyethylene niedriger Dichte bezeichnet, die neben Ethylen als Comonomere ein oder mehrere α-Olefine mit mehr als 3 C-Atomen enthalten.

Erfindungsgemäß gelang die Bewältigung der gestellten Aufgabe durch eine Mischung bestehend aus
- 60 bis 98 Gew.-% teilkristallinem Polyamid polymerisiert aus m-Xylylendiamin und Adipinsäure,
- 2 bis 40 Gew.-% aliphatischem Polyamid enthaltend anorganischen Partikel mit einem charakteristischem Partikeldurchmesser kleiner als 800 nm,
wobei der Anteil der organischen und/oder anorganischen Partikel in der Polymermischung kleiner als 10 Gew.-% ist.

Die verwendeten Nanoteilchen können organischer oder anorganischer Art sein. Bei den anorganischen Partikeln sind die natürlichen oder synthetischen Schichtsilikate besonders geeignet. Zu den natürlich vorkommenden Schichtsilikaten sind insbesondere die vom Typ des Montmorillonit zu zählen. Bei den synthetischen Schichtsilikaten die vom Typ Fluorglimmer, die durch Umsetzung von Talkum mit fluoridischen Salzen gewonnen werden. Weiterhin können alle Oxide oder Nitride der Übergangsmetalle eingesetzt werden. Bei den organischen Nanopartikeln können z.B. die Salze von aliphatischen mono- oder dibasischen Säuren oder Arylalkylsäuren eingesetzt werden.

Die Mischung verschiedener Polymere erfolgt zweckmäßigerweise durch die intensive Vermengung des Granulats vor der Zugabe in den Extruder. Im Extruder werden dann die Stoffe intensiv gemischt bzw. die Additive dispergiert.

Die erfindungsgemäße Mischung kann auf allen Extrusionseinrichtungen verarbeitet werden. Die erfindungsgemäße Mischung kann mit verschiedensten Substraten kombiniert werden. Als Substrate können zum Beispiel eingesetzt werden Papier, Aluminiumfolie, Zellglas, biaxialorientiertes Polypropylen (BOPP), biaxialorientiertes Polyalkylenterephthalat, gerecktes und ungerecktes Polyamid, Polycarbonat, Polyvinylalkohol, Polystyrol oder orientiertes Polystyrol, metallisierte Filme, Folien basierend auf Polyolefinen sowie Kombinationen aus den genannten Substraten. Alle aufgeführten Substrate können ein- oder mehrschichtig aufgebaut sein. Die Substrate können eingefärbt, lackiert oder bedruckt sowie in beliebiger Kombination eingefärbt, lackiert und bedruckt sein.

Bei der Verarbeitung der erfindungsgemäßen Polymermischung zu einer Folie, Platte oder anderem Formkörper können natürlich die Koextrusionstechniken und alle anderem Techniken zum Kombinieren von Kunststoffolien wie z.B. die Klebstoffkaschierung, Beschichtung und Extrusionskaschierung angewandt werden. Wird die erfindungsgemäße Mischung oder Koextrudate enthaltend die erfindungsgemäße Mischung zu Folien verarbeitet, können diese auch gereckt sein (sowohl mono- als auch bioxial). Eine Erläuterung des Begriffes Verstrecken und Verfahren zur Herstellung gereckter Folien gibt Hensen (Hensen, Knappe, Potente: Handbuch der Kunststoffextrusionstechnik, Carl Hanser Verlag, München 1986).

In der folgenden Tabelle sind eine Auswahl von Kombinationsmöglichkeiten dargestellt. Selbstverständlich lassen sich auch andere Strukturen herstellen.

| Nr. | Struktur |
|---|---|
| 1 | PA/PAM2 |
| 2 | PA/PAM2/PA |
| 3 | PAM1/PAM2/PA |
| 4 | PAM1/PAM2/PAM1 |
| 5 | PA/PAM2/HV/(LDPE+LLDPE) |
| 6 | PAM1/PAM2/HV/EVA |
| 7 | PAM2/HV/PAM2/HV/I |
| 8 | HDPE/HV/PAM1/PAM2/HV/HDPE |
| 9 | LDPE/HV/PAM2/HV/PAM2/HV/I |
| 10 | PA/PAM2/PA/HV/(EVA+LDPE) |
| 11 | PP/HV/PAM2/HV/PAM2/HV/I |

Erläuterungen zur Tabelle:
PA = Polyamid allgemein
PAM1 = PA + NT (NT= Nanoteilchen)
PAM2 = PA MXD6 + PAM1
HV = haftvermittelnde Schicht; dies kann ein koextrudierbarer Haftvermittler wie auch eine aufgetragene Klebstoffschicht sein.
I = Ionomere, Copolymere bestehend aus Ethylen und Acrylsäure und/oder Methacrylsäure, dessen Kettenmoleküle durch Ionenbindung vernetzt sind. Die ionische Vernetzung ist reversibel. Üblicherweise werden Natrium- oder Zink-Ionen genommen.

Überraschenderweise ist es mit der erfindungsgemäße Polymermischung möglich, sehr transparente Folien mit ausgezeichneten Barriereeigenschaften herzustellen. Die genannten Anforderungen werden durch die erfindungsgemäße Folie in besonderer Weise erfüllt.

Es war nicht zu erwarten, daß die erfindungsgemäße Polymermischung vor und nach einer Sterilisation eine sehr hohe Transparenz und eine bessere Sauerstoffbarriere als PA MXD6 aufweist.

Ein weiterer Gegenstand der Erfindung ist daher die Verwendung der erfindungsgemäßen Folie in Kombination mit Siegelschichten bestehend aus Polyolefinen, wie z.B. Polyethylen (LDPE, HDPE), Polypropylen, Ethylen/α-Olefin-Copolymerisate (LLDPE) hergestellt mit konventionellen Ziegler-Natta-Katalysatoren bzw. mit Metallocen-Katalysatoren, oder aus Olefinen abgeleitete Polymere wie z.B. Ethylen/Vinylacetat-Copolymere (EVA), Ethylen-Copolymerisate mit ungesättigten Estern (z.B. EBA), Ethylen-Copolymerisate mit ungesättigten Carbonsäuren (z.B. EAA, EMAA), Ionomere enthält. Insbesondere die mit Metallocen-Katalysatortechnik hergestellten Ethylen/α-Olefin-Copolymerisate mit niedrigen Dichten (kleiner 0,92 g/cm³) zeichnen sich als Siegelschichtmaterialien wegen ihrer niedrigen Siegelanspringtemperaturen und des hohen Hot-Tack aus.

Folien enthaltend die erfindungsgemäße Mischung sind geeignet für die Verpackung trockener Produkte (z.B. Snack-Artikel, Teigwaren etc.) oder feuchter Produkte (z.B. Fleisch, Käse, Fertiggerichte etc.) oder tiefgefrorener Produkte (z.B. Fertiggerichte) oder pharmazeutischer Produkte oder Wursthüllen.

Die Herstellung der erfindungsgemäßen Polymermischung kann in allen Kompoundiereinrichtungen erfolgen. Es empfielt sich allerdings, die Nanoteilchen während der Polymerisation des Polyamides zuzugeben, um eine gute Dispergierung zu erreichen. Die Verarbeitung der Polymermischung kann auf allen gängigen Extrusionseinrichtungen erfolgen. Die Herstellung einer Folie kann auf allen ein- oder mehrschichtigen Blas-, Flachfolien-, Beschichtungs- oder Extrusionskaschieranlagen erfolgen. Weiterhin ist es möglich, ein oder mehrere der genannten Fertigungsverfahren zu kombinieren. Die so hergestellte Folie kann zum Beispiel auf einer Tiefdruck- oder Flexodruck-Maschine bedruckt werden.

### Prüfmethoden

Die Bestimmung der Sauerstoffdurchlässigkeit wird entsprechend des Entwurfes DIN 53380 Teil 3 in der Fassung vom Juli 1989 nach dem Trägergas-Verfahren vorgenommen. Sie ist definiert als die Menge Sauerstoff in Nml, die in 24 Stunden durch einen Quadratmeter Folie bei einem bar Differenzdruck bei einem bestimmten Klima diffundiert. Gemessen wird die Sauerstoffdurchlässigkeit mit dem Gerät *Ox-Tran 100* der Fa. Mocon Instrument. Die Sauerstoffdurchlässigkeit wird, wenn nicht weiter spezifiziert, in cm³/(m²*d*bar) bei 75% relativer Feuchte und einer Temperatur von 23°C angegeben.

Als Trübung wird die Lichtmenge in % angegeben, die die Probe nach Durchleuchten mit einem Zentralstrahl unter einem Raumwinkel >8° bis max. 160° verläßt. Sie wird bezogen auf die insgesamt durchtretende Lichtmenge. Die Messung erfolgt entsprechend der ASTM-Prüfnorm D 1003-61, Procedure A.

Die Viskosität der Polyamide wird, wenn nicht anders angegeben, als Viskositätszahl gemessen in 96%iger Schwefelsäure entsprechend DIN 53727 angegeben.

Die Sterilisation erfolgte in einen Druckwasserautoklaven in wäßriger Umgebung bei 121°C über einen Zeitraum von 30 Minuten. Die Auf- und Abkühlzeiten betragen 15 Minuten.

Die Delamination einer Folie kann durch visuelle Betrachtung der Folienränder leicht festgestellt werden.

### Beispiele und Vergleichsbeispiele

Alle genannten Polymere sind kommerziell erhältliche Handelsprodukte. Bei Mischungen werden, wenn nicht anders angegeben, die Konzentrationen der einzelnen Polymere in Gew.-% ausgedrückt.

Die Muster 1 bis 3 sind auf einer Flachfilmanlage koextrudiert worden. Die Massetemperatur der Schmelze betrug ca. 270°C und die Temperatur der Gießwalze 100°C.

| Muster 1: | | |
|---|---|---|
| PA6 | PA6 | PA6 |
| 16 µm | 36 µm | 16 µm |

Das verwendete PA6 weist eine Viskositätszahl von 206 auf. Das PA6 ist nukleiert.

| Muster 2: | | |
|---|---|---|
| PA6 | PA MXD6 | PA6 |
| 16 µm | 36 µm | 16 µm |

Das in den Außenschichten eingesetzte PA6 entspricht dem PA6 des Musters 1.

Das PA MXD6 ist ein Polymerisat bestehend aus m-Xylylendiamin und Adipinsäure (Nylon-MXD6 6121 der Fa. Mitsubishi Gas Chemical Europe).

| Muster 3: | | |
|---|---|---|
| PA6 | 80% PA MXD6 + 20% PAM1 | PA6 |
| 16 µm | 36 µm | 16 µm |

Die Zusammensetzung von PAM1 beträgt 98% PA6 und 2% Nanoteilchen. Das Polymer PAM1 weist eine Viskositätszahl von 194 auf. Die Einarbeitung der Nanoteilchen erfolgte während der Polymerisation des PA6. Die Form der Nanoteilchen ist länglich, wobei die Länge zwischen 50 und 400 nm variiert. Die Nanoteilchen bestehen aus Aluminiumsilikat.

Das PA MXD6 entspricht dem aus Muster 2. Das in den Außenschichten eingesetzte PA6 entspricht dem PA6 des Musters 1.

| Muster | Trübung vor der Sterilisation | Trübung nach der Sterilisation | Delamination nach der Sterilisation | O₂-Durchlässigkeit [cm³/(m²*d*bar)] vor der Sterilisation |
|---|---|---|---|---|
| 1 | 7,4 % | 12,9 % | nein | 18,5 |
| 2 | 5,4 % | 57,2 % | nein | 4,0 |
| 3 | 6,3 % | 11,3 % | nein | 2,9 |

Die Sauerstoffdurchlässigkeit wurde vor der Sterilisation gemessen. Die nach der Sterilisation gemessene Sauerstoffdurchlässigkeit weicht nicht signifikant von der vor der Sterilisation gemessenen ab.

Völlig überraschend ist, daß mit dem Muster 3 eine Polymermischung gefunden wurde, die trotz Zugabe von PA6 eine bessere Sauerstoffbarriere als PA MXD6 aufweist und während der Sterilisation nicht eintrübt.

## Patentansprüche

1. Mischung erhältlich aus
- 60 bis 98 Gew.-% teilkristallinem Polyamid polymerisiert aus m-Xylylendiamin und Adipinsäure,
- 2 bis 40 Gew.-% aliphatischem Polyamid enthaltend anorganische und/oder organische Nanoteilchen mit einem charakteristischem Partikeldurchmesser (Sehnenlänge des Partikels) kleiner als 800nm,
wobei der Anteil der organischen und/oder anorganischen Nanoteilchen in der Polymermischung kleiner als 10 Gew.-% ist.

2. Mischung nach Anspruch 1, **dadurch gekennzeichnet, daß** das aliphatische Polyamid ein Polymerisat bestehend aus ω-Aminocarbonsäuren oder Lactamen bzw. aus Copolyamiden bestehend aus ω-Aminocarbonsäuren und Lactamen ist.

3. Mischung nach einem der Ansprüche 1 oder 2, **dadurch gekennzeichnet, daß** die Nanoteilchen aus natürlichen oder synthetischen Schichtsilikaten bestehen.

4. Mischung nach einem der Ansprüche 1 oder 2, **dadurch gekennzeichnet, daß** die Nanoteilchen aus Oxiden oder Nitriden der Übergangsmetalle bestehen.

5. Mischung nach einem der Ansprüche 1 bis 4, **dadurch gekennzeichnet, daß** die Nanoteilchen zusammen mit dem aliphatischem Polyamid polymerisiert werden.

6. Formkörper enthaltend eine Polymermischung nach einem der Ansprüche 1 bis 6.

7. Formkörper nach Anspruch 6, **dadurch gekennzeichnet, daß** der Formkörper eine Folie, Platte, Rohr, Stab oder ein anders profiliertes Halbzeug ist.

8. Folie nach Anspruch 7, **dadurch gekennzeichnet, daß** die Folie monoaxial oder biaxial verstreckt ist.

9. Folie nach Anspruch 8, **dadurch gekennzeichnet, daß** die Folie ein Koextrudat mit anderen Polymeren ist.

10. Folie nach Anspruch 7, **dadurch gekennzeichnet, daß** die Folie eine weitere Schicht bestehend aus
Polyethylen, Polypropylen, mit Ziegler-Natta-Katalysatoren bzw. Metallocen-Katalysatoren hergestellten Ethylen/α-Olefin-Copolymerisaten, oder
aus Ethylen/Vinylacetat-Copolymeren, Ethylen-Copolymerisaten mit ungesättigten Estern oder Ionomeren enthält.

11. Verwendung einer Folie nach Anspruch 8 für die Verpackung von Lebensmitteln oder medizinischen Artikeln.

## Claims

1. A mixture obtainable from
- 60 to 98 wt.% of a partially crystalline polyamide polymerised from m-xylylene diamine and adipic acid,
- 2 to 40 wt.% of an aliphatic polyamide containing inorganic and/or organic nanoparticles with a characteristic particle diameter (chord of the particle) of less than 800 nm,
wherein the proportion of organic and/or inorganic nanoparticles in the polymer mixture is less than 10 wt.%.

2. A mixture according to Claim 1, **characterised in that** the aliphatic polyamide is a polymer consisting of ω-aminocarboxylic acids or lactams or of copolyamides consisting of ω-aminocarboxylic acids and lactams.

3. A mixture according to one of Claims 1 or 2, **characterised in that** the nanoparticles consist of natural or synthetic sheet silicates.

4. A mixture according to one of Claims 1 or 2, **characterised in that** the nanoparticles consist of oxides or nitrides of transition metals.

5. A mixture according to one of Claims 1 to 4, **characterised in that** the nanoparticles are polymerised together with the aliphatic polyamide.

6. A moulded item containing a polymer mixture according to one of Claims 1 to 6.

7. A moulded item according to Claim 6, **characterised in that** the moulded item is a film, sheet, tube, rod or a differently shaped semi-finished product.

8. A film according to Claim 7, **characterised in that** the film is monoaxially or biaxially stretched.

9. A film according to Claim 8, **characterised in that** the film is a coextrudate with other polymers.

10. A film according to Claim 7, **characterised in that** the film has a further layer consisting of
polyethylene, polypropylene, ethylene/α-olefin copolymers prepared using Ziegler-Natta catalysts or metallocene catalysts, or
contains ethylene/vinyl acetate copolymers, ethylene copolymers with unsaturated esters or ionomers.

11. The use of a film according to Claim 8 for the packaging of foodstuffs or medicinal articles.

## Revendications

1. Mélange pouvant être obtenu à partir de
- 60 à 98 % en masse de polyamide partiellement cristallin polymérisé à partir de m-xylylènediamine et d'acide adipique,
- 2 à 40 % en masse de polyamide aliphatique contenant des nanoparticules inorganiques et/ou organiques ayant un diamètre de particule caractéristique (longueur de corde de la particule) inférieur à 800 nm,
où la proportion des nanoparticules organiques et/ou inorganiques dans le mélange de polymères est inférieure à 10 % en masse.

2. Mélange selon la revendication 1, **caractérisé en ce que** le polyamide aliphatique est un polymère consistant en acides ω-aminocarboxyliques ou en lactames, ou en copolyamides consistant en acides ω-aminocarboxyliques et en lactames.

3. Mélange selon l'une des revendications 1 ou 2, **caractérisé en ce que** les nanoparticules consistent en silicates feuilletés naturels ou synthétiques.

4. Mélange selon l'une des revendications 1 ou 2, **caractérisé en ce que** les nanoparticules consistent en oxydes ou nitrures des métaux de transition.

5. Mélange selon l'une des revendications 1 à 4, **caractérisé en ce que** les nanoparticules sont polymérisées avec le polyamide aliphatique.

6. Corps mis en forme contenant un mélange de polymères selon l'une des revendications 1 à 6.

7. Corps mis en forme selon la revendication 6, **caractérisé en ce que** le corps mis en forme est une feuille, une plaque, un tube, une barre ou un semi-produit profilé d'une autre manière.

8. Feuille selon la revendication 7, **caractérisée en ce que** la feuille est étirée monoaxialement ou biaxialement.

9. Feuille selon la revendication 8, **caractérisée en ce que** la feuille est un coextrudat avec d'autres polymères.

10. Feuille selon la revendication 7, **caractérisée en ce que** la feuille contient une autre couche consistant en polyéthylène, polypropylène, copolymères éthylène/α-oléfine produits avec des catalyseurs de Ziegler-Natta ou des catalyseurs de type métallocènes, ou en copolymères éthylène/acétate de vinyle, en copolymères d'éthylène avec des esters insaturés ou en ionomères.

11. Utilisation d'une feuille selon la revendication 8 pour l'emballage d'aliments ou d'articles médicaux.
